# EUROPÄISCHE PATENTSCHRIFT

(11) **EP 1 880 785 B1**
(45) Veröffentlichungstag und Bekanntmachung des Hinweises auf die Patenterteilung: **24.04.2013**
(21) Anmeldenummer: 07111806.1
(22) Anmeldetag: 05.07.2007
(51) Int. Cl.: B23B 31/40, B24B 45/00, B27B 5/32

(54) **Werkzeugaufnahme für ein scheibenförmiges Werkzeug**
Tool fitting for a disc-shaped tool
Cavité pour un outil en forme de disque

(30) Priorität: 20.07.2006 DE 102006000360
(43) Veröffentlichungstag der Anmeldung: 23.01.2008
(73) Patentinhaber: HILTI Aktiengesellschaft, 9494 Schaan (LI)
(72) Erfinder: Weber, Christoph, 6345, Neuheim (CH); Hoop, Matthäus, 9492, Eschen (LI)
(74) Vertreter: Wildi, Roland

(56) Entgegenhaltungen:
- FR-A- 1 147 362
- FR-A- 1 421 931
- US-A- 2 846 826
- US-A- 4 691 685
- US-A- 4 870 946

## Beschreibung

Die Erfindung betrifft eine Werkzeugaufnahme für ein scheibenförmiges Werkzeug, wie insbesondere eine Trennscheibe, gemäß dem Oberbegriff des Patentanspruchs 1. Die Werkzeugaufnahme weist ein Werkzeugaufnahmemittel und ein Werkzeugaufnahmegegenmittel auf, die von einem motorisch betriebenen Werkzeuggerät um eine Arbeitsachse herum antreibbar sind und zwischen denen das Werkzeug drehfest anbringbar ist. Dabei sind an dem Werkzeug eine Zentralbohrung und wenigstens zwei von dieser beabstandete Durchgangsbohrungen, die jeweils einen sich über die Bohrungslänge sprunghaft oder kontinuierlich verändernden Durchmesser aufweisen, wie Senk- oder Stufenbohrungen, vorgesehen. Zudem weist das Werkzeugaufnahmemittel eine Zentralausnehmung auf, die im angebrachten Zustand des Werkzeugaufnahmemittels von einer zentralen Festlegeanordnung zur axialen Festlegung des Werkzeugaufnahmemittels durchragt wird. Ferner ist am Werkzeugaufnahmemittel wenigstens ein zur Zentralausnehmung beabstandetes Kopplungsmittel vorgesehen. Über dieses Kopplungsmittel ist eine exzentrische Drehmitnahme mit einer der Durchgangsbohrungen der Trennscheibe herstellbar.

Derartige Werkzeugaufnahmen ermöglichen zwei grundsätzliche Befestigungsarten der Werkzeugscheibe. Bei der ersten Befestigungsart wird die Werkzeugscheibe mittels lediglich einer einzigen Schraube der zentralen Festlegeanordnung an dem Werkzeugaufnahmemittel festgelegt. Hierbei wird die Werkzeugscheibe zwischen dem Werkzeugaufnahmemittel und dem Werkzeugaufnahmegegenmittel form- oder reibschlüssig eingespannt. Diese erste Befestigungsart ermöglicht eine leichte Montage und Demontage der Werkzeugscheibe durch Lösen beziehungsweise Anziehen der zentralen Festlegeanordnung.

Bei der zweiten Befestigungsart wird die Werkzeugscheibe über mehrere Schrauben an dem dem Werkzeuggerät zugewandten Aufnahmemittel aus Werkzeugaufnahmemittel oder Werkzeugaufnahmegegenmittel festgeschraubt. Die Köpfe dieser Schrauben werden dabei vollständig in den von der Zentralbohrung beabstandeten Senk- oder Stufenbohrungen aufgenommen. Auf diese Weise ragen keine Kopplungsmittel in axialer Richtung an der freien Seite der Werkzeugscheibe ab. Die zweite Befestigungsart ermöglicht somit die Herstellung eines bündigen Schnittes parallel zu einer Fläche, wie beispielsweise einem Boden, einer Wand oder einer Decke. Ferner können bei dieser Befestigungsart wesentlich grössere Drehmomente übertragen beziehungsweise aufgenommen werden.

Aus der US 4,870,946 ist eine fluidgekühlte Betonsäge bekannt. Diese weist ein flanschförmiges Werkzeugaufnahmemittel mit einer Zentralausnehmung und mehreren zu dieser beabstandeten Kopplungsmitteln auf. Die Kopplungsmittel weisen in Gewindebohrungen befestigte Senkkopfschrauben auf, deren Senkköpfe beim Festlegen einer Werkzeugscheibe in entsprechende Senkbohrungen verlegt werden, die in die Werkzeugscheibe eingelassen sind. Alternativ hierzu ist eine Befestigung der Werkzeugscheibe über eine äussere Lagerplatte vorgesehen, die über eine Zentralschraube an einem Abtriebsschaft der Betonsäge gehalten wird. Hierdurch wird die Werkzeugscheibe zwischen dem Werkzeugaufnahmemittel und der äusseren Lagerplatte axial festgelegt, wobei die Drehmitnahme der Werkzeugscheibe über einen Stift erfolgt, der vom Werkzeugaufnahmemittel absteht und in eine Öffnung der Werkzeugscheibe greift.

Bei dieser bekannten Werkzeugaufnahme ist für einen normalen Schnittbetrieb neben der hierfür vorgesehenen Befestigung über die Zentralschraube auch eine zusätzliche Befestigung der Werkzeugscheibe über die Kopplungsmittel möglich, um das übertragbare Drehmoment zu erhöhen. Dabei ist jedoch die Anbringung und Entfernung der Werkzeugscheibe wegen der Vielzahl von Schraubverbindungen relativ zeitaufwändig.

Eine Werkzeugaufnahme gemäß dem Oberbegriff des Anspruchs 1 geht beispielsweise aus der US 2,846,826 A hervor.

Aus US 2,846,826 A und FR 1 147 362 A sind weitere Werkzeugaufnahmen für scheibenförmige Werkzeuge bekannt. Die Werkzeugaufnahmen umfassen ein Werkzeugaufnahmemittel und ein Werkzeugaufnahmegegenmittel, die um eine Arbeitsachse herum antreibbar sind und zwischen denen das Werkzeug drehfest anbringbar ist. Das Werkzeugaufnahmemittel weist eine Zentralausnehmung, die von einer zentralen Festlegeanordnung durchragbar ist, und wenigstens ein zur Zentralausnehmung radial beabstandetes Kopplungsmittel für eine Verbindung mit wenigstens einer Durchgangsbohrung des scheibenförmigen Werkzeuges auf. Die Kopplungsmittel sind als Schrauben ausgebildet, die mit Durchgangsbohrungen, die ein Innengewinde aufweisen, jeweils eine Schraubverbindung bilden. Die Anbringung und Entfernung des scheibenförmigen Werkzeuges ist wegen der Vielzahl von Schraubverbindungen relativ zeitaufwändig.

Der vorliegenden Erfindung liegt die Aufgabe zugrunde, bei einer gattungsgemässen Werkzeugaufnahme die genannten Nachteile zu vermeiden und bei einfacher Montierbarkeit beziehungsweise Demontierbarkeit eine hohe Drehmomentaufnahme zwischen dem Werkzeugaufnahmemittel und dem scheibenförmigen Werkzeug zu gewährleisten.

Erfindungsgemäss wird die Aufgabe durch die Merkmale des Anspruchs 1 gelöst, wobei das wenigstens eine Kopplungsmittel einen Drehanschlag für eine axial lösbare Steckverbindung mit der wenigstens einen Durchgangsbohrung aufweist. Durch eine derartige axial lösbare Steckverbindung zwischen den Kopplungsmitteln und den Durchgangsbohrungen kann das zwischen dem scheibenförmigen Werkzeug und dem Werkzeugaufnahmemittel aufnehmbare Drehmoment deutlich erhöht werden. Dabei wird durch den Drehanschlag des wenigstens einen Kopplungsmittels ein in Drehrichtung wirksamer Formschluss zwischen dem Werkzeugaufnahmemittel und der Werkzeugscheibe erzeugt. Dieser Formschluss kann wegen des relativ grossen radialen Abstandes zur Arbeitsachse, der als Kraftarm wirkt, ein grosses Drehmoment erzeugen beziehungsweise aufnehmen. Gleichzeitig kann eine derartige Werkzeugaufnahme leicht montiert oder demontiert werden, beispielsweise um eine abgenutzte Werkzeugscheibe auszutauschen. Hierzu muss lediglich die zentrale Festlegeanordnung, die beispielsweise durch eine einzige Schraubverbindung gebildet sein kann, gelöst oder angezogen werden. Die zentrale Festlegeanordnung kann dabei entweder als blosse axiale Sicherung der Werkzeugscheibe oder zusätzlich auch als, beispielsweise reibschlüssige, Drehmitnahme ausgebildet werden. In jedem Fall ist die zentrale Festlegeanordnung so ausgelegt, dass sie den durch die lose Steckverbindung hergestellten Eingriff zwischen den Durchgangsbohrungen und den Kopplungsmitteln bei den im vorgesehenen Betrieb auftretenden Momenten in axialer Richtung sichert.

In einer besonders bevorzugten Ausführungsform weist das wenigstens eine Kopplungsmittel einen gegenüber dem Werkzeugaufnahmemittel festen oder abnehmbaren Formkörper auf, der mit einer der Durchgangsbohrungen korreliert. Hierdurch kann die Steckverbindung annähernd spielfrei hergestellt werden, wodurch eine maximierte Drehmomentübertragung auf das Werkzeug ermöglicht wird und unnötige Geräuschbildungen verhindert werden. Durch den oder die korrelierenden Formkörper werden dabei zudem die betreffenden Durchgangsbohrungen vollständig ausgefüllt, was wiederum die durch die Durchgangsbohrungen hervorgerufene Materialschwächung teilweise aufhebt und die Steifigkeit des Werkzeuges erhöht. Darüber hinaus wird das Werkzeug durch den Formkörper exakt gegenüber dem Werkzeugaufnahmemittel positioniert. Dies ermöglicht eine hinsichtlich der Strömungsverhältnisse optimierte Anordnung von Kühlwasserleitmitteln des Werkzeugaufnahmemittels gegenüber dem Werkzeug.

Vorteilhafterweise sind die Durchgangsbohrungen durch Senkbohrungen gebildet und der Formkörper weist an einem freien Ende jeweils einen mit der betreffenden Senkbohrung korrelierenden konischen Abschnitt auf. Hierdurch kann die Steckverbindung zwischen dem Werkzeug und dem Werkzeugaufnahmemittel besonders einfach hergestellt werden, da sich die Formkörper aufgrund ihrer konischen Form in den Senkbohrungen selbst zentrieren und dadurch das gesamte Werkzeug exakt gegenüber dem Werkzeugaufnahmemittel positionieren.

Erfindungsgemäß ist der Formkörper durch eine Unterlegscheibe gebildet, die durch ein Befestigungsmittel am Werkzeugaufnahmemittel festgelegt ist. Hierdurch können die Formkörper einfach hergestellt und beispielsweise mittels handelsüblicher Schrauben an dem Werkzeugaufnahmemittel befestigt werden, was die Herstellungskosten weiter verringert.

Vorteilhafterweise weist das wenigstens eine Kopplungsmittel hierbei eine Gewindebohrung auf, an der der Formkörper festschraubbar ist. Hierdurch ist es möglich das Werkzeugaufnahmemittel auch ohne oder mit unterschiedlichen Formkörpern zu verwenden. Auf diese Weise kann das Werkzeugaufnahmemittel an verschiedene Betriebsarten beziehungsweise an verschiedene Werkzeugscheiben angepasst werden.

Ferner sind vorteilhafterweise wenigstens drei, insbesondere sechs, Kopplungsmittel vorgesehen, wodurch um die Arbeitsachse herum eine gleichmässige Drehmomentübertragung vom Werkzeugaufnahmemittel auf das Werkzeug möglich ist.

Die Erfindung wird nachstehend anhand eines Ausführungsbeispieles näher erläutert. Es zeigen:
- Fig. 1: einen Schnitt durch einen Gerätekopf eines Werkzeuggerätes mit einer erfindungsgemässen Werkzeugaufnahme,
- Fig. 2: einen Schnitt durch ein Werkzeugaufnahmemittel der Werkzeugaufnahme nach Fig. 1 und einer mit diesem in Eingriff stehenden Werkzeugscheibe und
- Fig.3: eine perspektivische Ansicht des Werkzeugaufnahmemittels nach Fig. 2 in Alleinstellung.

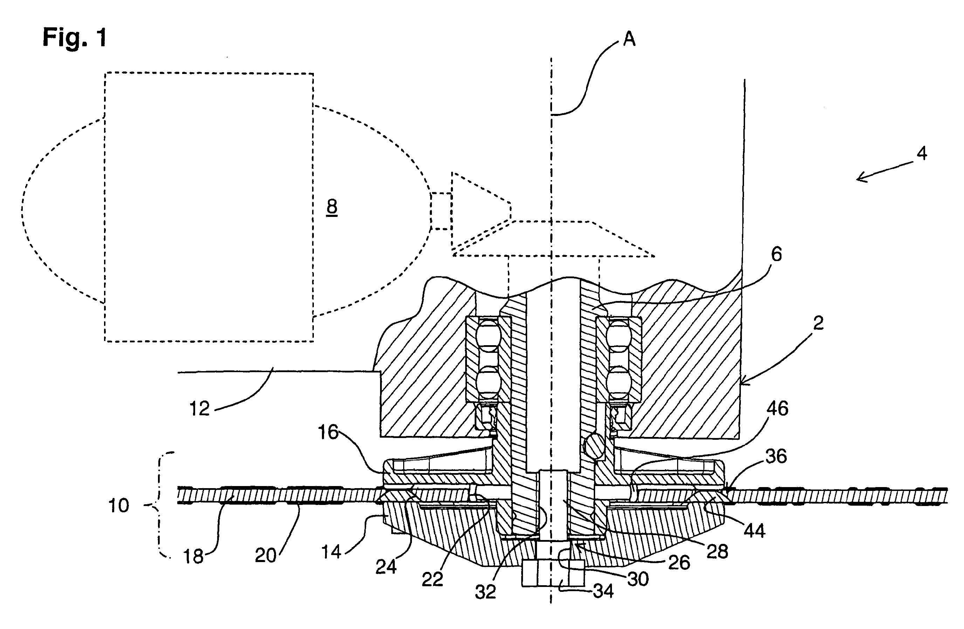

Fig. 1 zeigt einen Gerätekopf 2 eines Werkzeuggerätes 4 in Form eines handgeführten Winkelschleifgerätes. Das Werkzeuggerät 4 weist einen spindelförmigen Abtrieb 6 auf, der von einem Motor 8 um eine Arbeitsachse A herum antreibbar ist. An dem Abtrieb 6 ist dabei eine im Wesentlichen zweiteilige Werkzeugaufnahme 10 gehalten, die ein von einem Gehäuse 12 des Werkzeuggerätes 4 abgewandtes, flanschförmiges Werkzeugaufnahmemittel 14 und ein dem Gehäuse 12 zugewandtes, scheibenförmiges Werkzeugaufnahmegegenmittel 16 aufweist. Zwischen dem Werkzeugaufnahmemittel 14 und dem Werkzeugaufnahmegegenmittel 16 ist dabei, wie dargestellt, ein scheibenförmiges Werkzeug 18, wie insbesondere eine Trennscheibe, festlegbar.

Das Werkzeug 18, an dem beispielsweise diamantbesetzte Schneidsegmente 20 vorgesehen sein können, weist eine Zentralbohrung 22 sowie sechs gegenüber dieser radial beabstandete Durchgangsbohrungen 24 auf. Diese Durchgangsbohrungen 24 sind als Senkbohrungen ausgebildet, deren Durchmesser sich im gezeigten angebrachten Zustand des Werkzeuges 18 in Richtung des Gehäuses 12 kontinuierlich verjüngen. Alternativ hierzu können die Durchgangsbohrungen 24 auch als Stufenbohrung (nicht dargestellt) mit sprunghafter Durchmesseränderung ausgebildet sein.

Durch die Zentralbohrung 22 ragt im angebrachten Zustand des Werkzeuges 18 eine insgesamt mit 26 bezeichnete zentrale Festlegeanordnung, die sich im Wesentlichen aus dem Abtrieb 6 des Werkzeuggerätes 4 und einer Zentralschraube 28 zusammensetzt. Die Zentralschraube 28 durchragt dabei sowohl eine Zentralausnehmung 30 des Werkzeugaufnahmemittels 14 als auch die Zentralbohrung 22 des Werkzeuges 18 und ist in eine Gewindelängsbohrung 32 des Abtriebes 6 eingeschraubt. Ein Kopf 34 der Zentralschraube 28 liegt dabei am Werkzeugaufnahmemittel 14 an und drückt dieses unter Zwischenlage des Werkzeuges 18 gegen das Werkzeugaufnahmegegenmittel 16.

Auf diese Weise wird die axiale Position des Werkzeugaufnahmemittels 14 und des Werkzeuges 18 gesichert und gleichzeitig eine reibschlüssige Drehmitnahme zwischen der Werkzeugscheibe 18 und dem Werkzeugaufnahmemittel 14 und dem Werkzeugaufnahmegegenmittel 16 erzeugt. Zudem wird hierbei an jeder der Durchgangsbohrungen 24 eine hinsichtlich der Arbeitsachse A in axialer Richtung lose Steckverbindung 36 hergestellt.

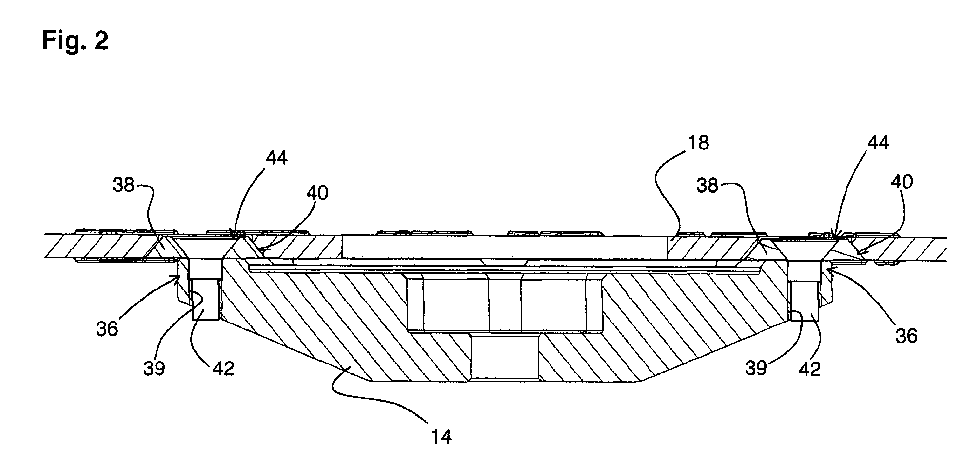

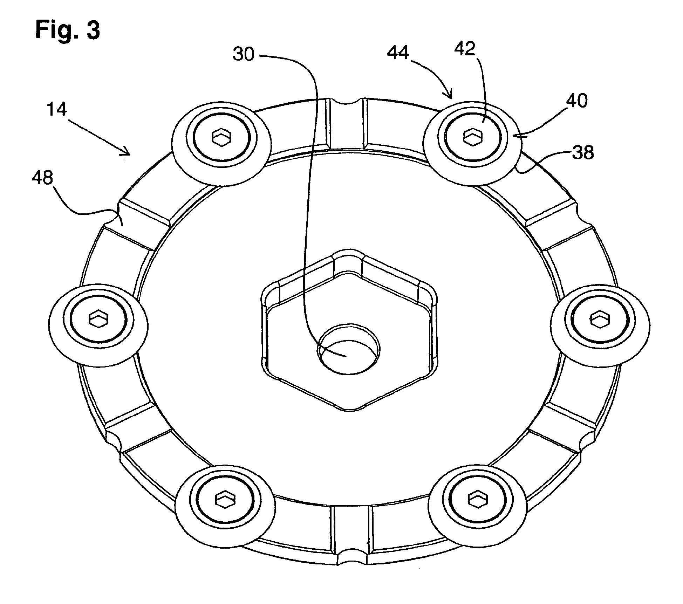

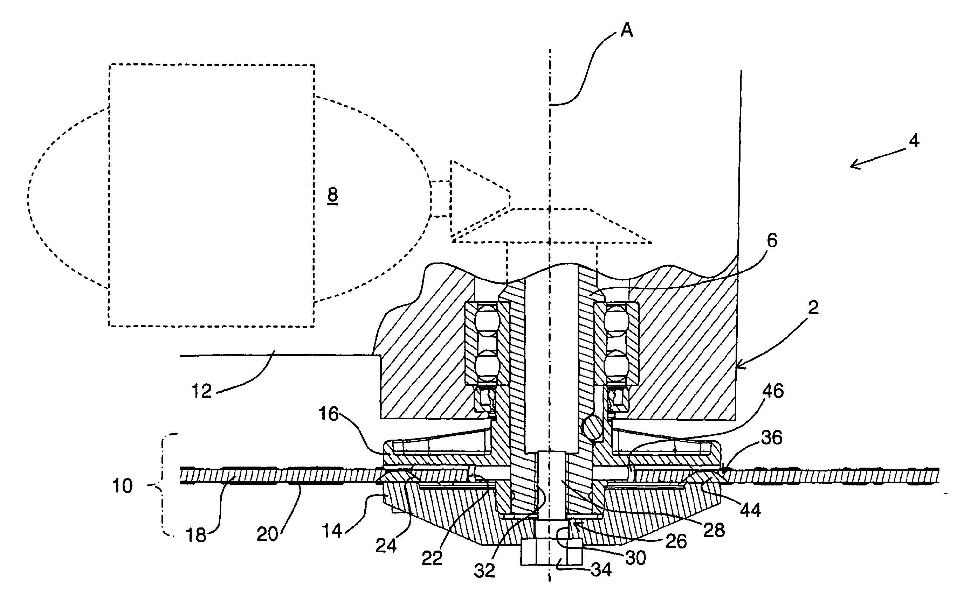

Wie insbesondere aus den Fig. 2 und 3 zu entnehmen ist, sind zur Herstellung der Steckverbindungen 36 am Werkzeugaufnahmemittel 14 sechs Kopplungsmittel 44 vorgesehen. Diese weisen jeweils einen durch eine Unterlegscheibe gebildeten Formkörper 38 mit einer konischen Umfangsfläche 40 und eine in einer Gewindebohrung 39 festgeschraubte Schraube 42 auf, die den Formkörper 38 am Werkzeugaufnahmemittel 14 hält, wie insbesondere aus Fig. 2 zu entnehmen ist. Auf diese Weise bilden die Kopplungsmittel 44 an ihren freien Enden jeweils einen konischen Abschnitt aus, der sich von dem Werkzeugaufnahmemittel 14 weg verjüngt.

Die konischen Umfangsflächen 40 sind in Grösse und Anordnung am Werkzeugaufnahmemittel 14 auf die Grösse und Anordnung der Durchgangsbohrungen 28 des Werkzeuges 18 abgestimmt und bilden jeweils einen Drehanschlag. Mit diesem Drehanschlag greifen die Kopplungsmittel 44 im betriebsbereiten Zustand des Werkzeuggerätes 4 in axialer Richtung lose in die Durchgangsbohrungen 24 des Werkzeuges 18 und bilden mit diesen jeweils eine zusätzliche exzentrische Drehmitnahme.

Zur Montage des Werkzeuges 18 wird die Zentralschraube 28 von der Gewindelängsbohrung 32 gelöst und das Werkzeugaufnahmemittel 14 vom Abtrieb 6 entfernt. Anschliessend wird das Werkzeug 18 an dem Werkzeugaufnahmegegenmittel 16 angelegt. Um dabei die exakte zentrische Ausrichtung des Werkzeuges 18 zu erleichtern, ist am Werkzeugaufnahmegegenmittel 16 eine Ringschulter 46 vorgesehen, die einen geringfügig kleineren Durchmesser als die Zentralbohrung 22 des Werkzeuges 18 aufweist. Hierdurch kann das Werkzeug 18 mit der Zentralbohrung 22 auf die Ringschulter 46 aufgeschoben werden, durch die sie gegenüber der Arbeitsachse A zentriert wird.

Sobald das Werkzeug 18 gegenüber der Arbeitsachse A positioniert ist, wird das Werkzeugaufnahmemittel 14 an das Werkzeug 18 angelegt, wobei die Kopplungsmittel 44 mit den Durchgangsbohrungen 24 in Eingriff gebracht werden. Hierdurch bilden das Werkzeugaufnahmemittel 14 und das Werkzeug 18 die exzentrischen Steckverbindungen 36 aus. Die als Drehanschläge fungierenden Umfangsflächen 40 wirken dabei in Drehrichtung um die Arbeitsachse A herum formschlüssig mit den Durchgangsbohrungen 24 zusammen und ermöglichen dadurch ein hohes übertragbares beziehungsweise aufnehmbares Drehmoment. Ferner nimmt das Werkzeug 18 hierbei eine exakt vorbestimmte Position gegenüber dem Werkzeugaufnahmemittel 14 ein. In dieser Position sind mehrere nutförmige Kühlwasserleitmittel 48 (siehe Fig. 3), die in radialer Richtung in das Werkzeugaufnahmemittel 14 eingelassen sind, so angeordnet, dass ein im Betrieb entlang dieser Kühlwasserleitmittel 48 fliessender Kühlstrom nicht durch Konturen, wie beispielsweise Bohrungen oder Schneidmittel, des Werkzeuges 18 gestört wird.

Entlang der Arbeitsachse A greifen die Kopplungsmittel 44 lediglich lose in die Durchgangsbohrungen ein. Die axiale Sicherung des Werkzeuges 18 und des Werkzeugaufnahmemittels 14 erfolgt daher erst durch Festschrauben der Zentralschraube 28 am Abtrieb 6.

## Patentansprüche

1. Werkzeugaufnahme (10) für ein scheibenförmiges Werkzeug (18) mit einem Werkzeugaufnahmemittel (14) und einem Werkzeugaufnahmegegenmittel (16), die um eine Arbeitsachse (A) herum antreibbar sind und zwischen denen das Werkzeug (18) drehfest anbringbar ist, wobei das Werkzeugaufnahmemittel (14) eine Zentralausnehmung (30), die von einer zentralen Festlegeanordnung (26) durchragbar ist, sowie wenigstens ein zu dieser radial beabstandetes Kopplungsmittel (44) für wenigstens eine Durchgangsbohrung (24) des Werkzeuges (18) aufweist,
**dadurch gekennzeichnet, dass** das wenigstens eine Kopplungsmittel (44) einen Drehanschlag für eine axial lösbare Steckverbindung mit der wenigstens einen Durchgangsbohrung (24) aufweist, wobei das wenigstens eine Kopplungsmittel (44) jeweils einen Formkörper (38) aufweist und wobei der Formkörper (38) durch eine Unterlegscheibe gebildet ist, die durch ein Befestigungsmittel (42) am Werkzeugaufnahmemittel (14) festgelegt ist.

2. Werkzeugaufnahme nach Anspruch 1,
**dadurch gekennzeichnet, dass** der Formkörper (38) einen konischen Abschnitt aufweist

3. Werkzeugaufnahme nach Anspruch 1 oder 2,
**dadurch gekennzeichnet, dass** das wenigstens eine Kopplungsmittel (44) eine Gewindebohrung (39) aufweist, an der der Formkörper (38) festschraubbar ist.

4. Werkzeugaufnahme nach einem der Ansprüche 1 bis 3,
**dadurch gekennzeichnet, dass** wenigstens drei Kopplungsmittel (44) vorgesehen sind.

## Claims

1. A tool holder (10) for a disc-shaped tool (18), said tool holder (10) comprising a tool-holding device (14) and a cooperating tool-liolding device (16), together being capable of being driven in rotation about a working axis (A), the tool (18) being fixed between them in such a way as to rotate jointly therewith, with the tool-liolding device (14) having a central opening (30), through which a central clamping arrangement (26) can be inserted, as well as at least one coupling device (44), located at a distance in radial direction from the central opening (30), for engaging in at least one through-hole (24) of the tool (18),
**characterized in that** the at least one coupling device (44) comprises a rotary stop for forming an axially releasable plug-in connection with the at least one through-liole (24), said at least one coupling device (44) having a shaped body (38) and the shaped body (38) taking the form of a washer which is fixed by fastening means (42) to the tool-holding device (14).

2. A tool-holder according to Claim 1,
**characterized in that** the shaped body (38) has a conical portion.

3. A tool-holder according to Claim 1 or 2,
**characterized in that** the at least one coupling device (44) has a threaded hole (39), enabling the shaped body (38) to be screwed down.

4. A tool-holder according to one of Claims 1 to 3,
**characterized in that** at least three coupling devices (44) are provided.

## Revendications

1. Porte-outil (10) pour un outil en forme de disque (18) comportant un élément de retenue d'outil (14) et un élément complémentaire de retenue d'outil (16) qui peuvent être entraînés autour d'un axe de travail (A) et entre lesquels l'outil (18) peut être monté en étant bloqué en rotation, l'élément de retenue d'outil (14) comportant une ouverture centrale (30) qui peut s'étendre à partir d'un système de blocage central (26) ainsi qu'au moins un élément de couplage (44) radialement distant dudit système de blocage central pour au moins un trou traversant (24) de l'outil (18),
**caractérisé en ce que** le au moins un élément de couplage (44) comporte une butée rotative pour s'engager de manière axialement libérable dans le au moins un trou traversant (24), dans lequel chacun des au moins un élément de couplage (44) comporte un élément moulé (38) et dans lequel l'élément moulé (38) est formé par une rondelle qui peut être bloquée sur l'élément de retenue d'outil (14) par des moyens de fixation (42).

2. Porte-outil selon la revendication 1, **caractérisé en ce que** l'élément moulé (38) a une section conique.

3. Porte-outil selon la revendication 1 ou 2, **caractérisé en ce que** le au moins un élément de couplage (44) comporte un alésage fileté (39) sur lequel l'élément moulé (38) peut être vissé de manière serrée.

4. Porte-outil selon l'une quelconque des revendications 1 à 3, **caractérisé en ce qu'**au moins trois éléments de couplage (44) sont prévus.
